# EUROPÄISCHE PATENTSCHRIFT

(11) **EP 3 548 594 B1**
(45) Veröffentlichungstag und Bekanntmachung des Hinweises auf die Patenterteilung: **31.08.2022**
(21) Anmeldenummer: 17835584.8
(22) Anmeldetag: 05.12.2017
(51) Int. Cl.: C11D 3/37, C08G 63/688, C08G 63/672, C11D 3/00

(54) **ANIONISCHE SOIL RELEASE POLYESTER UND DEREN VERWENDUNG**
ANIONIC SOIL RELEASE POLYESTER AND USE THEREOF
POLYESTER DE LIBÉRATION DE SOUILLURES ANIONIQUES ET SON UTILISATION

(30) Priorität: 05.12.2016 DE 102016014409; 24.04.2017 DE 102017003927
(43) Veröffentlichungstag der Anmeldung: 09.10.2019
(73) Patentinhaber: Scholz, Gertraud, 63755 Alzenau (DE)
(72) Erfinder: Scholz, Gertraud, 63755 Alzenau (DE)
(74) Vertreter: Völger, Karl Wolfgang
(86) Internationale Anmeldenummer: PCT/EP2017/025358
(87) Internationale Veröffentlichungsnummer: WO 2018/103895

(56) Entgegenhaltungen:
- EP-A1- 1 966 273
- EP-A1- 2 431 456
- WO-A1-2011/063944
- DE-A1-102015 206 547

## Beschreibung

Die Erfindung betrifft Feststoffpartikel enthaltend isosorbidhaltige Polyester anionischer Natur und deren Verwendung sowohl in festen als auch in flüssigen Zusammensetzungen.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Antiknittereffekt ist bekannt.

In US 4,702,857 werden Polyester aus Ethylenglykol, 1,2-Propylenglykol oder Mischungen daraus, aromatischen Dicarbonsäuren und sulfonierten, aromatischen Dicarbonsäuren mit langkettigen nichtionischen Endgruppen mit mindestens 12 Glykoleinheiten und mit einer Methylgruppe verkappt beschrieben.

EP 1 966 273 A1 beschreibt anionische Polyester enthaltend Terephthalat- und Sulfoterephthalateinheiten, Struktureinheiten, abgeleitet von Diolen, sowie kurzkettige nichtionische Endgruppen.

In US 4,721,580 werden Polyester mit Terephthalat-Einheiten und sulfohaltigen Endgruppen, insbesondere sulfoethoxylierte Endgruppen MO₃S(CH₂CH₂O)ₙ-H, offenbart.

US 5,182,043 beansprucht Polyester mit Sulfobenzoylgruppen.

In EP 2431 456 A1 werden nichtionische und anionische Polyester beschrieben, die ein Strukturelement, abgeleitet von hydrierten und zweifach dehydratisierten Aldo- und Ketohexosen, insbesondere von Isosorbid, enthalten. Am Beispiel wird gezeigt, dass bei Zugabe eines nichtionischen Polyesters zu einem Flüssigwaschmittel unmittelbar beim Start des maschinellen Waschprozesses eine gute Primärwaschleistung erreicht wird. Flüssigwaschmittel enthaltend diese Polyester sind nicht beschrieben. EP 2431 456 A1 beschreibt ferner nicht den Aggregatszustand der anionische Polyester mit Isosorbid-Struktureinheiten. Die Beispiele beziehen sich ausschließlich auf nichtionische Polyester, wobei für Beispiel 1 der Aggregatszustand des nichtionischen Polyesters mit fest bis zähflüssig beschrieben wird. Solche festen bis zähflüssigen Polyester sind für feste Waschmittel jedoch ungeeignet. Werden Polyester in einem Flüssigwaschmittel gelöst, hydrolysieren diese nach kurzer Zeit und verlieren ihre Funktion.

DE 10 2015 206 547 A1 offenbart partikuläre Feststoffe mit einem mittleren Partikeldurchmesser X50,3 von 0,01 mm bis 3 mm, enthaltend bezogen auf das Gesamtgewichteine Gesamtmenge von 30 Gew.-% bis 100 Gew.-%, bevorzugt 50 Gew.-% bis 100 Gew.-%, besonders bevorzugt 75 Gew.-% bis 100 Gew.-%, mindestens eines Polyesters, enthaltend mindestens eine Struktureinheit einer ersten Formel und mindestens eine Struktureinheit einer zweiten Formel. Diese partikulären Feststoffe lassen sich nach der Offenbarung stabil in flüssigen, wasserhaltigen Tensid-Zusammensetzungen suspendieren.

Nachteilig an den bekannten Polyestern ist, dass diese nicht oder nur in geringem Umfang sowohl für pulverförmige als auch flüssige Waschmittel geeignet sind. Bei der Verwendung in flüssigen Waschmitteln besteht ferner das Problem, dass die bekannten Polyester bei niedrigeren Temperaturen keine ausreichende Löslichkeit zeigen. Zudem ist die Hydrolysestabilität unzureichend und die Lagerstabilität insbesondere in flüssigen Zusammensetzungen zu gering.

Ausgehend von diesen Nachteilen des Standes der Technik liegt der vorliegenden Erfindung die Aufgabe zugrunde, Polyester bereitzustellen, die sowohl für die Einarbeitung in feste als auch in flüssige Wasch- und Reinigungsmittel geeignet sind. Die Polyester sollen auch bei tieferen Waschtemperaturen unterhalb von 40 °C löslich, lagerstabil und nicht hydrolyseempfindlich sein und eine ausgezeichnete Performance hinsichtlich Primärwaschwirkung und Soil Release Effekt zeigen.

Diese Aufgabe wird in einem ersten Aspekt der vorliegenden Erfindung durch Feststoffpartikel gelöst, umfassend mindestens einen anionischen aromatischen Polyester enthaltend die Komponenten
a) mindestens eine Struktureinheit der Formel (I) 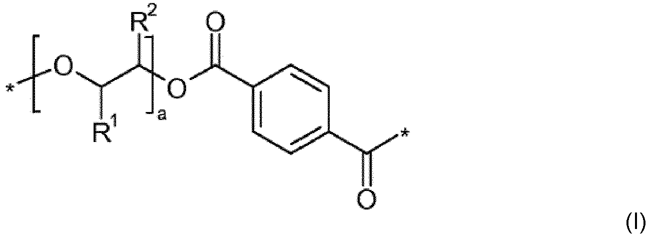
b) mindestens eine Struktureinheit der Formel (IIa) und/oder (IIb)

   -(-CH₂-CH₂-O-)_{c}-(-CHR⁵-CHR⁶-O)_{d}-R⁷ (IIa)

   -(-CHR⁵-CHR⁶-O-)_{d}-(-CH₂-CH₂-O)_{c}-R⁷ (IIb)
c) mindestens eine Struktureinheit der Formel (III) 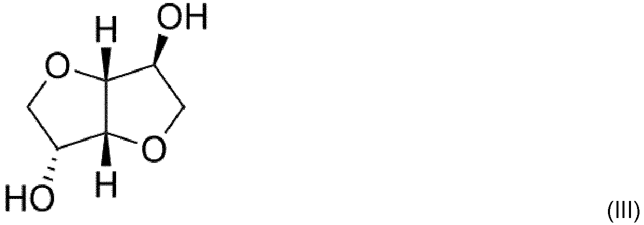
d) ein oder mehrere Diole, ausgewählt aus Ethylenglykol, 1,2-Propylenglykol und Butylenglykol,
e) eine oder mehrere Struktureinheiten, die aus den Formeln (IV), (V) und (VI) ausgewählt sind

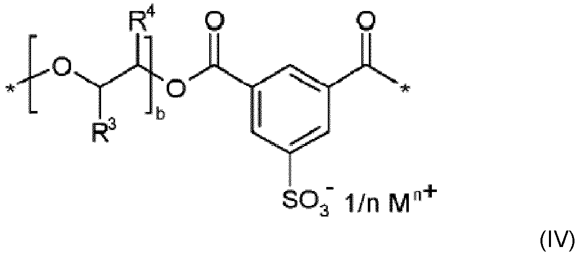

   1/n Mⁿ⁺ SO₃- -(-CH₂-CH₂-O -)ₑ ⁻ (V)

   eine von der Sulfobenzoesäure oder deren Salzen abgeleitete Struktureinheit (VI),
worin
R¹, R², R³, R⁴, R⁵ und R⁶ unabhängig voneinander jeweils für Wasserstoff oder Methyl steht,
R⁷ für Methyl steht,
a und b unabhängig voneinander jeweils für eine Zahl von 1 bis 10 stehen,
c und d unabhängig für eine Zahl von 1 bis 60 stehen,
e für die Zahl 1 bis 10 steht und
1/n Mⁿ⁺ für ein Äquivalent eines Kations mit der Ladungszahl n steht, mit n = 1, 2 oder 3,
   mit der Maßgabe, dass der anionische aromatische Polyester mindestens eine Struktureinheit ausgewählt aus (IV), (V) oder (VI) enthalten muss.

Die vorstehende Aufgabe wird in weiteren Aspekten der vorliegenden Erfindung durch eine feste Zubereitung, enthaltend die erfindungsgemäßen Feststoffpartikel, durch eine flüssige Zubereitung, enthaltend die erfindungsgemäßen Feststoffpartikel, sowie die Verwendung der erfindungsgemäßen Feststoffpartikel zur Herstellung eines festen Wasch- und Reinigungsmittels und die Verwendung der erfindungsgemäßen Feststoffpartikel zur Herstellung eines flüssigen Wasch- und Reinigungsmittels gelöst. Die vorliegende Erfindung hat den Vorteil, dass die erfindungsgemäßen Feststoffpartikel sich durch eine ausgezeichnete Primärwaschleistung und einen guten Soil Release Effekt auszeichnen. Die Feststoffpartikel sind nicht hygroskopisch und auch in flüssiger Zusammensetzung hydrolysestabil und können in Tensid-haltigen flüssigen Zusammensetzungen bei einem pH von 6 bis 8 als stabile Suspension dargeboten werden.

Nachstehend wird die vorliegende Erfindung im Detail beschrieben.

Der erste Aspekt der vorliegenden Erfindung betrifft Feststoffpartikel, welche mindestens einen anionischen aromatischen Polyester umfassen. Der mindestens eine anionische aromatische Polyester enthält die Komponenten
a) mindestens eine Struktureinheit der Formel (I), 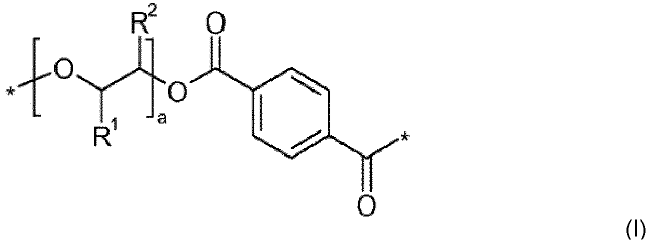
b) mindestens eine Struktureinheit der Formel (IIa) und/oder (IIb)

   -(-CH₂-CH₂-O-)_{c}-(-CHR⁵-CHR⁶-O)_{d}-R⁷ (IIa)

   -(-CHR⁵-CHR⁶-O-)_{d}-(-CH₂-CH₂-O)_{c}-R⁷ (IIb)
c) mindestens eine Struktureinheit der Formel (III) 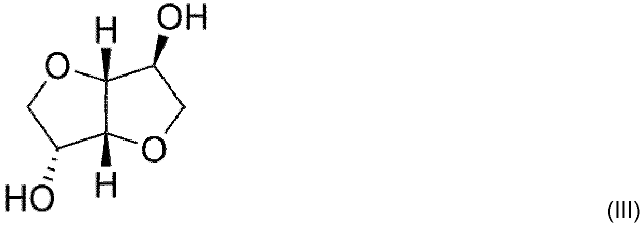
d) ein oder mehrere Diole, ausgewählt aus Ethylenglykol, 1,2-Propylenglykol und Butylenglykol,
e) eine oder mehrere Struktureinheiten, die aus den Formeln (IV), (V) und (VI) ausgewählt sind

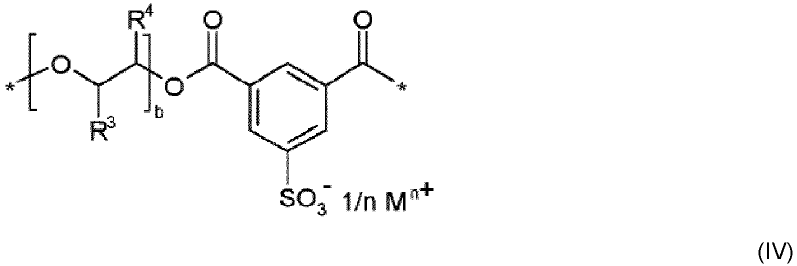

   1/n Mⁿ⁺ SO₃- -(-CH₂-CH₂-O -)ₑ ⁻ (V)

   eine von der Sulfobenzoesäure oder deren Salzen, abgeleitete Struktureinheit (VI).

In den Strukturformeln bzw. Summenformeln
steht R¹, R², R³, R⁴, R⁵ und R⁶ unabhängig voneinander jeweils für Wasserstoff oder Methyl,
steht R⁷ für Methyl,
stehen a und b unabhängig voneinander jeweils für eine Zahl von 1 bis 10,
stehen c und d unabhängig für eine Zahl von 1 bis 60,
steht e für die Zahl 1 bis 10 und 1/n Mⁿ⁺ für ein Äquivalent eines Kations mit der Ladungszahl n, mit n = 1, 2 oder 3,
   mit der Maßgabe, dass der anionische aromatische Polyester mindestens eine Struktureinheit ausgewählt aus (IV), (V) oder (VI) enthalten muss.

Die erfindungsgemäßen Feststoffpartikel zeichnen sich zunächst durch eine ausgezeichnete Primärwaschwirkung und einen guten Soil Release Effekt aus. Der Begriff "Soil Release" wird in der vorliegenden Erfindung für eine erleichterte Entfernung von Schmutz bzw. dessen erleichterte Auswaschbarkeit verwendet.

Die erfindungsgemäßen Feststoffpartikel sind ferner nicht hygroskopisch und auch in flüssiger Zusammensetzung hydrolysestabil und können in Tensid-haltigen flüssigen Zusammensetzungen bei einem pH von 6 bis 8 als stabile Suspension dargeboten werden.

In Bezug auf den Stand der Technik EP 2 431 456 A1 bestand für die vorliegende Erfindung die Herausforderung darin, feste Polyester mit guter Soil Release Wirkung bereitzustellen, die in Form von Feststoffpartikeln sowohl in feste Waschmittel, wie auch in hochkonzentrierte Flüssigwaschmittel eingearbeitet werden können.

Diese Herausforderung wurde mit den erfindungsgemäßen Feststoffpartikeln gelöst. Die erfindungsgemäßen Feststoffpartikel haben bei einer Temperatur von 20 °C einen festen Aggregatszustand und behalten somit das Volumen und die Form bei. Die erfindungsgemäßen Feststoffpartikel zeichnen sich weiter dadurch aus, dass sie nicht klebrig sind und nicht agglomerieren, beispielsweise infolge von elektrostatischer Aufladung infolge von Reibung mit Feststoffkomponenten.

Der erfindungsgemäße anionische aromatische Polyester kann insbesondere erhalten werden durch Polykondensation von Terephthalsäurester, Isosorbid, Alkylpolyglykolalkohol, Ethylenglykol, optional Propylenglykol, optional Butylenglykol, und einem oder mehreren Monomeren ausgewählt aus 5-Sulfoisophthalsäureester, Sulfobenzoesäure oder deren Salz und Metallsalze der Isethionsäure und höherer Homologen M⁺O₃S(CH₂CH₂O)ₙH⁻, die gegebenenfalls mit weiteren Inhaltsstoffen in Form von Feststoffpartikel in feste Wasch- und Reinigungsmittel als auch in flüssige Waschmittel als suspendierte Feststoffpartikel eingearbeitet werden können.

Diole der Komponente d) sind ausgewählt aus Ethylenglykol, 1,2-Propylenglykol und Butylenglykol. Anionische aromatische Polyester, enthaltend Struktureinheiten der Monomeren Ethylenglykol, 1,2-Propylenglykol und Butylenglykol, besonders bevorzugt Struktureinheiten von Ethylenglykol, Propylenglykol und Mischungen daraus zeichnen sich durch ein gesteigertes Dispergiervermögen aus und wirken der Vergrauung der Wäsche entgegen.

Diese Polyester zeichnen sich durch besonders gute Löslichkeit und Hydrolysestabilität aus.

Beispiele für die von der Sulfobenzoesäure oder deren Salzen abgeleitete Struktureinheit (VI) werden nachstehend in Tabelle 1 gegeben.

Die erfindungsgemäßen Feststoffpartikel können einen mittleren Partikeldurchmesser X_{50,3} von 0,05 mm bis 2 mm, bevorzugt 0,08 mm bis 1,8 mm, besonders bevorzugt 0,1 mm bis 1,5 mm, aufweisen.

Die erfindungsgemäßen Feststoffpartikel mit diesen mittleren Partikeldurchmessern X_{50,3} zeichnen sich dadurch aus, dass diese als Feststoffpartikel in flüssigen, Tensid-haltigen Zusammensetzungen als stabile, homogene Suspension dargeboten werden können, die keine Tendenz zum Aufschwimmen der Feststoffpartikel oder zum Sedimentieren zeigen und erst beim Verdünnen der Suspension in Wasser in Lösung gehen.

Bei dem mittleren Partikeldurchmesser X_{50,3} handelt es sich um das Volumenmittel der Partikel, gemessen nach Lagerung der Feststoffpartikel im Klimaschrank für 24 Stunden bei 30 °C und 50 % relativer Luftfeuchtigkeit. Die Ermittlung der Teilchengrößen erfolgte durch Laser-Diffraktometrie unter Anwendung der Norm ISO13320 (2009). Die Laser-Diffraktometrie beruht auf dem Effekt, dass Partikel, die durch einen Laserstrahl gehen, das Licht in einem Winkel streuen, der in direktem Zusammenhang mit ihrer Größe steht. Mit abnehmender Partikelgröße nimmt der beobachtete Streuwinkel logarithmisch zu. Auch die Intensität der Lichtstreuung ist von der Partikelgröße abhängig; sie nimmt mit dem Partikelvolumen ab. Große Partikel streuen das Licht demzufolge mit hoher Intensität in engeren Winkeln, während kleine Partikel das Licht in breiteren Winkeln, allerdings mit geringer Intensität streuen. Die Partikelgrößenverteilung wird berechnet, indem das Streumuster einer Probe mit einem optischen Modell verglichen wird.

Die erfindungsgemäßen Feststoffpartikel können ferner, bezogen auf das Gewicht der Feststoffpartikel, eine Gesamtmenge von 5 Gew.-% bis 100 Gew.-%, bevorzugt 20 Gew.-% bis 99,99 Gew.-%, besonders bevorzugt 40 Gew.-% bis 99,90 Gew.-% des mindestens einen anionischen aromatischen Polyesters umfassen. Die bevorzugten erfindungsgemäßen Feststoffpartikel zeichnen sich dadurch aus, dass diese keinen nennenswerten Feinstaubanteil haben, homogen in feste und in flüssige Zubereitungen eingearbeitet werden können und auch nach längeren Lagerzeiten keine Tendenz zum Absinken oder Aufschwimmen der Feststoffpartikel beobachtet wird.

In einer Weiterbildung der erfindungsgemäßen Feststoffpartikel enthält der mindestens eine anionische aromatische Polyester ferner f) eine polyfunktionelle Einheit. Diese polyfunktionelle Einheit kann als Vernetzer ausgebildet sein. Als polyfunktionelle Einheit in Betracht kommen beispielsweise Glycerin, Pentaerythrit, Trimethylolethan, 1,2,3-Hexantriol, Sorbit oder Mannit. Ebenso in Betracht kommen mehrwertige aromatische Carbonsäuren, vorzugsweise Benzol-1,2,3-tricarbonsäure (Hemimellithsäure), Benzol-1,2,4-tricarbonsäure (Trimellithsäure) und Benzol-1,3,5-tricarbonsäure (Trimesithsäure).

In einer weiteren bevorzugten Ausführungsform der Erfindung enthalten die Feststoffpartikel den mindestens einen anionischen aromatischen Polyester, der dadurch gekennzeichnet ist, dass R¹, R², R³, R⁴, R⁵ und R⁶ der Struktureinheiten (I), (IIa), (IIb) und (IV) für Wasserstoff steht und R⁷ für Methyl steht. Die auf diese Weise gebildeten anionischen aromatischen Polyester zeichnen sich durch eine bessere Granulierbarkeit und eine geringere Klebrigkeit aus.

In einer besonders bevorzugten Ausführungsform der Erfindung enthalten die Feststoffpartikel den mindestens einen anionischen aromatischen Polyester, der dadurch gekennzeichnet ist, dass a und b der Struktureinheiten (I) und (IV) unabhängig voneinander jeweils für eine Zahl von 1 bis 3 stehen. Außerordentlich bevorzugt stehen a und b der Struktureinheiten (I) und (IV) für 1. Die auf diese Weise gebildeten anionischen aromatischen Polyester zeichnen sich durch eine feste Konsistenz und zur Herstellung von Feststoffpartikel vorteilhaftes plastisches Verhalten aus. Darüber hinaus zeigen sie eine verbesserte Soil Release Wirkung und eine verbesserte Primärwaschwirkung.

Unter "Primärwaschwirkung" wird im Sinne der vorliegenden Erfindung eine hohe spezifische Waschwirkung gegenüber fettigen, öligen Anschmutzungen und Pigmentschmutz verstanden.

In einer weiteren bevorzugten Ausführungsform der Erfindung enthalten die Feststoffpartikel den mindestens einen anionischen aromatischen Polyester, der dadurch gekennzeichnet ist, dass c und d der Struktureinheiten (IIa) und (IIb) unabhängig voneinander jeweils für eine Zahl von 1 bis 40, besonders bevorzugt von 2 bis 25 und außerordentlich bevorzugt von 3 bis 20, stehen. Diese in den erfindungsgemäßen Feststoffpartikeln enthaltenen anionischen aromatischen Polyester zeichnen sich durch eine feste, nicht klebrige Konsistenz mit guter Hydrolysestabilität und geringer Hygroskopizität aus.

Verbesserte Soil Release Eigenschaften zeigen anionische aromatische Polyester, die im Zahlenmittel 3 bis 16, bevorzugt 4 bis 12 und außerordentlich bevorzugt 5 bis 8, Terephthalateinheiten, abgeleitet von den Struktureinheiten (I) und (IV), enthalten.

In einer weiteren bevorzugten Ausführungsform der Erfindung enthalten die Feststoffpartikel den mindestens einen anionischen aromatischen Polyester, der dadurch gekennzeichnet ist, dass das zahlenmittlere Verhältnis der Summe der Terephthalateinheiten, abgeleitet von den Struktureinheiten (I) und (IV), zu den Isosorbideinheiten 1 zu 1 bis 30 zu 1, bevorzugt 2 zu 1 bis 20 zu 1, besonders bevorzugt 3 zu 1 bis 10 zu 1, beträgt. Diese Feststoffpartikel zeichnen sich durch eine verbesserte Primärwaschwirkung aus.

In einer weiteren bevorzugten Ausführungsform der Erfindung enthalten die Feststoffpartikel den mindestens einen anionischen aromatischen Polyester, der dadurch gekennzeichnet ist, dass er eine oder mehrere Struktureinheiten der Formel (IV) und eine Endgruppe der Struktureinheit (V) enthält, wobei der Index ₑ für die Zahl 1 steht. Diese Feststoffpartikel zeichnen sich durch eine sehr gute Wasserlöslichkeit bei Temperaturen unterhalb von 40 °C, bevorzugt bei 30 °C und unterhalb von 30 °C, besonders bevorzugt bei 25 °C und unterhalb von 25 °C, aus. Diese Feststoffpartikel lösen sich vollständig auf, ohne weißliche Niederschläge auf dunkler Wäsche zu bilden.

In einer bevorzugten Ausführungsform der Erfindung enthalten die Feststoffpartikel den mindestens einen anionischen aromatischen Polyester, der dadurch gekennzeichnet ist, dass er Struktureinheiten der Komponente d), abgeleitet von Ethylenglykol und 1,2-Propylenglykol ohne weitere Struktureinheit, abgeleitet von einem Diol enthält.

In einer bevorzugten Ausführungsform der Erfindung ist die Komponente d) ein oder mehrere Diole von Ethylenglykol und 1,2-Propylenglykol ohne weitere Struktureinheit abgeleitet, wobei das Verhältnis von Ethylenglycol zu 1,2-Propylenglycol > 0,5 ist. Das Verhältnis von Ethylenglycol zu 1,2-Propylenglycol ist bevorzugt 0,51 bis 1000, besonders bevorzugt 1 bis 100.

Diese bevorzugte Ausführungsform zeichnet sich durch einen verbesserten Soil Release Effekt, eine verbesserte Formulierbarkeit in Wasch- und Reinigungsmitteln durch größere physikalische Stabilität und geringe Tendenz zur Kristallinität aus.

In einer ebenso bevorzugten Ausführungsform der Erfindung enthalten die Feststoffpartikel den mindestens einen anionischen aromatischen Polyester, der dadurch gekennzeichnet ist, dass er Struktureinheiten der Komponente d), abgeleitet von Ethylenglykol ohne weitere Struktureinheit, abgeleitet von einem Diol der Komponente d), enthält.

Diese anionischen aromatischen Polyester zeichnen sich dadurch aus, dass die im Herstellverfahren erhaltene Schmelze nicht zu hochviskos ist und fließfähig bleibt. Die nach dem Abkühlen erhaltenen erfindungsgemäßen anionischen aromatischen Polyester sind fest, aber nicht spröde und hart und können zu einheitlichen Partikeln verarbeitet werden. Die erfindungsgemäßen anionischen aromatischen Polyester haben Erweichungspunkte oberhalb von 40 °C, bevorzugt einen Erweichungspunkt zwischen 50 °C und 200 °C, besonders bevorzugt zwischen 60 °C und 150 °C.

Die in den Feststoffpartikeln enthaltenen vorstehend beschriebenen anionischen aromatischen Polyester können optional weitere Struktureinheiten, beispielsweise abgeleitet von Polyethylenglykol mit mittleren Molmassen von 100 g/mol bis 8.000 g/mol enthalten. Diese anionischen aromatischen Polyester zeichnen sich durch eine größere Plastifizierbarkeit und geringere Sprödigkeit aus.

Die in den Feststoffpartikeln enthaltenen vorstehend beschriebenen anionischen aromatischen Polyester können optional weitere Struktureinheiten enthalten, die sich von Monomeren ableiten, die zur Polykondensation geeignet sind, beispielsweise 1,4-Cyclohexandicarbonsäure oder dessen Salz. Diese anionischen aromatischen Polyester zeichnen sich durch eine bessere Löslichkeit in Wasser aus.

In einer bevorzugten Ausführungsform der Erfindung enthalten die Feststoffpartikel den mindestens einen vorstehend beschriebenen anionischen aromatischen Polyester, der dadurch gekennzeichnet ist, dass er aus Struktureinheiten der Komponenten a) bis d) sowie Struktureinheiten der Formel (IV) besteht. Diese anionischen aromatischen Polyester zeichnen sich durch ein sehr gute Primärwaschwirkung und gute Löslichkeit in Wasser aus.

In einer ebenso bevorzugten Ausführungsform der Erfindung enthalten die Feststoffpartikel den mindestens einen vorstehend beschriebenen anionischen aromatischen Polyester, der dadurch gekennzeichnet ist, dass er aus Struktureinheiten der Komponenten a) bis d) sowie Struktureinheiten der Formeln (IV) und (V) besteht. Diese anionischen aromatischen Polyester zeichnen sich durch eine sehr gute Wasserlöslichkeit bei Temperaturen von 30 °C und < 30 °C aus.

In einer weiteren bevorzugten Ausführungsform der Erfindung enthalten die Feststoffpartikel den mindestens einen vorstehend beschriebenen anionischen aromatischen Polyester, der dadurch gekennzeichnet ist, dass das zahlenmittlere Molekulargewicht des einen anionischen aromatischen Polyesters 1.500 g/mol bis 12.000 g/mol, bevorzugt 2.000 g/mol bis 10.000 g/mol, besonders bevorzugt 2.500 g/mol bis 8.000 g/mol, außerordentlich bevorzugt 3.000 g/mol bis 6.000 g/mol, beträgt. Das zahlenmittlere Molekulargewicht wird mittels Größenausschlusschromatographie in wässriger Lösung unter Verwendung einer Kalibrierung mit Hilfe eng verteilter Polyacrylsäure-Na-Salz-Standards bestimmt.

Diese anionischen aromatischen Polyester zeichnen sich durch eine verbesserte Soil Release Wirkung, eine verbesserte gute Primärwaschleistung und eine bessere Wasserlöslichkeit im Vergleich zu anionischen aromatischen Polyestern aus, die sich zwar von den gleichen Monomeren ableiten, jedoch zahlenmittlere Molekulargewichte oberhalb von 12.000 g/mol aufweisen.

Die erfindungsgemäßen Feststoffpartikel können in einer Ausführungsform einen oder mehrere der vorstehend beschriebenen anionischen aromatischen Polyester zu 100 % ohne weitere Inhaltsstoffe enthalten. Diese erfindungsgemäßen Feststoffpartikel können in einfacher Weise nach gängigen Methoden hergestellt und den Herstellern von Wasch-und Reinigungsmittel zur Verfügung gestellt werden.

Die vorstehend beschriebenen anionischen aromatischen Polyester haben eine beige bis gelbliche Farbe und können aus ästhetischen Gründen gefärbt werden, entweder durch Vermischen der Polyester mit Pigmenten oder Farbstoffen oder durch Zugabe eines Pigmentes oder Farbstoffes während der Synthese des Polyesters wie in EP 2 552 994 A1 beschrieben.

In vorteilhafter Weise können die erfindungsgemäßen Feststoffpartikel zusätzlich zu mindestens einem der vorstehend beschriebenen anionischen aromatischen Polyester mindestens einen nichtionischen, aromatischen Polyester enthalten. Geeignete Polyester sind beispielsweise in, DE 198 26 356 A1, WO 2006/045396 A1, EP 2 431 456 A1, WO 2014/019658 A1 oder in WO 2014/029468 A1 beschrieben.

Die erfindungsgemäßen Feststoffpartikel, enthaltend mindestens einen der vorstehend genannten anionischen aromatischen Polyester, können in einer bevorzugten Ausführungsform dadurch gekennzeichnet sein, dass diese anionischen aromatischen Polyester in einer Polymermatrix eingearbeitet sind. Die Polymermatrix kann eine oder mehrere Polymere umfassen, die ausgewählt sind aus einem nichtionischen, aromatischen Polyester und/oder einem Polymer ausgewählt aus Cellulose, insbesondere Methylcellulose, Carboxymethylcellulose oder Hydroxyethylcellulose, Polyethylenglykole, beispielsweise PEG 6000, (Meth)arylsäurepolymere und -copolymere, Polymere und Copolymere der 2-Acrylamido-2-methylpropansulfonsäure, Alginate, Agar, Carrageenan, Pektin, Gelatine und Gellan Guar. Diese erfindungsgemäßen Feststoffpartikel zeichnen sich durch eine gute Abriebfestigkeit aus und können in flüssigen Zusammensetzungen als stabile Suspensionen vorliegen. Sie zeichnen sich bei der Verwendung zum Reinigen harter Oberflächen durch ein sehr gutes Ablaufverhalten aus und wirken der Vergrauung der weißen Wäsche entgegen.

Die Herstellung der erfindungsgemäßen Feststoffpartikel, enthaltend mindestens einen der vorstehend beschriebenen anionischen aromatischen Polyester und mindestens eines der oben genannten Polymere, wird vorzugsweise durchgeführt, indem eine wässrige Lösung, bevorzugt 0,5 %ige bis 10 %ige wässrige Polymerlösung mit einer 10 %igen bis 60 %igen (a.i.) Lösung oder Suspension eines vorstehend beschriebenen anionischen Polyesters, vorzugsweise in Propylenglykol, Glycerin, Ethanol und/oder Isopropanol vermischt wird und die Polymere in Anwesenheit eines Vernetzers, ausgewählt aus einem Alkalisalz oder mehrwertigen Salzen, beispielsweise Erdalkalisalze, insbesondere Calcium- und Magnesiumsalze, aber auch Zinksalze, insbesondere Zinksulfat und Zinkcarbonat, vernetzt werden. Diese erfindungsgemäßen Feststoffpartikel zeichnen sich durch eine gute Stabilität in wässrigen Zusammensetzungen aus und wirken in Anwesenheit von Zinksalzen korrosionsinhibierend.

In einer bevorzugten Ausführungsform beträgt das Gewichtsverhältnis des einen oder der mehreren vorstehend genannten anionischen Polyester zur Polymermatrix inklusive Vernetzer 99 zu 1 bis 10 zu 90, bevorzugt 95 zu 1 bis 20 zu 80, besonders bevorzugt 90 zu 1 bis 30 zu 70, bezogen auf die Trockenmasse des anionischen Polyesters und der Polymermatrix inklusive Vernetzer.

Eine bevorzugte Ausführungsform der Erfindung sind daher Feststoffpartikel, dadurch gekennzeichnet, dass diese mindestens einen der vorstehend beschriebenen anionischen aromatischen Polyester und mindestens ein weiteres Polymer, ausgewählt aus einem nichtionischen, aromatischen Polyester, Cellulose, insbesondere Methylcellulose, Carboxymethylcellulose oder Hydroxyethylcellulose, Polyethylenglykole, (Meth)arylsäurepolymere und -copolymere, Polymere und Copolymere der 2-Acrylamido-2-methylpropansulfonsäure, Alginate, Agar, Carrageenan, Pectin und/ oder Guar enthalten. Die erfindungsgemäßen Feststoffpartikel, enthalten vorzugsweise 0,1 Gew.-% bis 95,0 Gew.-% und besonders bevorzugt 1,0 Gew.-% bis 80 Gew.-% eines oder mehrerer der vorstehend beschriebenen Polymere, bezogen auf das Gesamtgewicht der erfindungsgemäßen Feststoffpartikel.

Die erfindungsgemäßen Feststoffpartikel zeichnen sich dadurch aus, dass diese eine Löslichkeit von 50 % bis 100 % bei Temperaturen von 20 °C aufweisen und eine Auflösegeschwindigkeit von 0,07 g/min bis 0,14 g/min bei 20 °C zeigen, wenn 0,7 g dieser Feststoffpartikel in 750 ml Wasser aufgelöst werden.

Die erfindungsgemäßen Feststoffpartikel können ebenso Inhaltsstoffe enthalten, ausgewählt aus einem oder mehreren Plastifizierhilfsstoff, Enzym, Enzymstabilisator, Bleichmittel, Bleichaktivator, Bleichkatalysator, Komplexbildner für Schwermetalle, Vergrauungsinhibitor, Farbübertragungsinhibitor, Schauminhibitor, optischer Aufheller, Riechstoff und anionischem Salz. Die erfindungsgemäßen Feststoffpartikel zeichnen sich durch eine hohe Lagerstabilität und stärkere Effektivität der Inhaltsstoffe aus. Die erfindungsgemäßen Feststoffpartikel, enthalten vorzugsweise 0,1 Gew.-% bis 95,0 Gew.-% und besonders bevorzugt 1,0 Gew.-% bis 80 Gew.-% eines oder mehrerer der vorstehend beschriebenen Inhaltsstoffe, bezogen auf das Gesamtgewicht der erfindungsgemäßen Feststoffpartikel.

In einer bevorzugten Ausführungsform enthalten die erfindungsgemäßen Feststoffpartikel mindestens einen Plastifizierhilfsstoff, ausgewählt aus Triethylcitrat, Triacetin, 1,2-Propylenglykol, Glyzerin, 2-Methyl-1,3-propylenglykol, Wasser oder Mischungen aus diesen. Die erfindungsgemäßen Feststoffpartikel zeichnen sich durch eine besonders gute Abriebfestigkeit aus. Die erfindungsgemäßen Feststoffpartikel, enthalten vorzugsweise 0,1 Gew.-% bis 50,0 Gew.-% und besonders bevorzugt 1,0 Gew.-% bis 30 Gew.-% eines oder mehrerer der vorstehend beschriebenen Inhaltsstoffe, bezogen auf das Gesamtgewicht der erfindungsgemäßen Feststoffpartikel.

In einer weiteren bevorzugten Ausführungsform enthalten die erfindungsgemäßen Feststoffpartikel einen Bleichkatalysator, vorzugsweise ein [bis (N, N'N" - Trimethyl-1,4,7-triazacyclononan)-trioxo-di-mangan-(IV)] Salz, eines Salzes von N, N'N" - Trimethyl-1,4,7-triazacyclononan, beispielsweise N, N'N" - Trimethyl-1,4,7-triazacyclononylchlorid, vorzugsweise in den Gewichtsmengen 0,1 Gew.-% bis 50,0 Gew.-% und besonders bevorzugt 1,0 Gew.-% bis 30 Gew.-% bezogen auf das Gesamtgewicht der erfindungsgemäßen Feststoffpartikel. Vorzugsweise enthalten die erfindungsgemäßen Feststoffpartikel einen Bleichkatalysator in Form sehr kleiner Partikel, wie in EP 3 181 677 A1 beschrieben, bevorzugt der Bleichkatalysator [bis (N, N'N" - Trimethyl-1,4,7-triazacyclononan)-trioxo-di-mangan-(IV)] PF₆, der durch volumenmittlere Teilchengrößen D97 im Bereich von 8 µm bis 35 µm gekennzeichnet ist. Diese erfindungsgemäßen Feststoffpartikel zeichnen sich durch eine gute Lagerstabilität, eine bessere Dosierbarkeit, eine gleichmäßigere Verteilung des Katalysators in der Endformulierung, und eine verbesserte Wirkung des Bleichkatalysators aus.

In einer weiteren bevorzugten Ausführungsform enthalten die erfindungsgemäßen Feststoffpartikel einen Bleichkatalysator und/oder ein oder mehrere Enzyme, wie in EP 3 180 429 A1 beschrieben. Besonders bevorzugt enthalten die erfindungsgemäßen Feststoffpartikel den Bleichkatalysator [bis (N, N'N" - Trimethyl-1,4,7-triazacyclononan)-trioxo-di-mangan-(IV)] PF₆ und ein oder mehrere Enzyme, ausgewählt aus Protease, Lipase, Amylase, Cellulase und Mannanase. Diese erfindungsgemäßen Feststoffpartikel zeichnen sich durch ein sehr hohes Reinigungsvermögen und große Sicherheit aus. Diese erfindungsgemäßen Feststoffpartikel zeichnen sich durch eine verbesserte Reinigungswirkung auch bei sehr geringer Dosierung des Bleichkatalysators und/oder der Enzyme aus und zeigen keine Farb- und Faserschädigungen der gereinigten Textilien und harten Oberflächen.

Die erfindungsgemäßen Feststoffpartikel weisen vorzugsweise Schüttgewichte von 200 g/l bis 800 g/l auf und sind geeignet, um in feste Zusammensetzungen homogen eingearbeitet werden zu können. Feste Zusammensetzungen enthaltend die erfindungsgemäßen Partikel zeigen keine Tendenz zur Entmischung in den festen Zusammensetzungen.

Die erfindungsgemäßen Feststoffpartikel sind ebenfalls geeignet, um in flüssige, strukturierte Tensid-haltige Zusammensetzungen, die vorzugsweise Fließgrenzen bei 25 °C im Bereich von 0,01 Pa bis 10 Pa, besonders bevorzugt 0,3 Pa bis 3 Pa, aufweisen, eingearbeitet werden zu können. Unter Fließgrenze wird in der Rheologie diejenige Schubspannung (Pascal) verstanden, unterhalb derer sich eine Zusammensetzung elastisch verformt und oberhalb derer eine irreversible, zeitabhängige, plastische Verformung, also ein Fließen stattfindet.

Vorzugsweise haben die Tensid-haltigen Zusammensetzungen folgende Zusammensetzung, wobei sich die Gewichtsprozente auf die flüssige Zusammensetzung als solche ohne den Gewichtsanteil der Feststoffpartikel bezieht:
5 Gew.-% bis 60 Gew.-%, bevorzugt 20 Gew.-% bis 40 Gew.-%, eines oder mehrerer anionischen Tenside, bevorzugt Sulfonate, Sulfate und Carboxylate, insbesondere C₉-C₁₃-Alkylbenzolsulfonate, Olefinsulfonate, sek. C₁₄-C₁₇-Alkansulfonate, Estersulfonate, C₁₂-C₁₈-Alkansulfonate, Alkylsulfate, Fettalkoholethersulfate, Carboxylate der Laurin-, Myristin-, Palmitin, Stearin-, Eruca- und Behensäure und Mischungen daraus,
2 Gew.-% bis 35 Gew.-%, bevorzugt 5 Gew.-% bis 28 Gew.-% eines oder mehrerer nichtionischer Tenside, bevorzugt alkoxylierte Fettalkohole mit einem Alkoxylierungsgrad von mindestens 4, besonders bevorzugt C₈-C₁₈-Fettalkohole mit 4 bis 12 Ethoxyeinheiten oder 4 bis 12 Ethoxy-/Propoxyeinheiten, Fettsäureamide, alkoxylierte Fettsäureamide, alkoxylierte Fettsäurealkylester, Polyhydroxyfettsäureamide, Aminoxide, Alkylpolyglycodide und Mischungen daraus,
0,5 Gew.-% bis 10 Gew.-% eines anorganischen Salzes, bevorzugt NaCl, KCl, Na₂SO₄, Na₂CO₃, K₂SO₄, K₂CO₃, Na₂CO₃, KHCO₃, CaCl₂, MgCl₂ und Mischungen daraus.

Die flüssige, Tensid-haltige Zusammensetzung kann weitere für flüssige Wasch- und Reinigungsmittel übliche Komponenten, wie Builder, Enzyme, Enzymstabilisatoren, Vergrauungsinhibitoren, Farbübertragungsinhibitoren, Optische Aufheller, Trübungs-und Farbmittel, Duftstoffe, Schauminhibitoren, Antioxidantien, Biozide und Konservierungsmittel enthalten.

Die erfindungsgemäßen Feststoffpartikel zeichnen sich weiter dadurch aus, dass sie in flüssigen Zusammensetzungen mit hohen Tensidkonzentrationen > 25 Gew.-% bezogen auf die flüssige Zusammensetzung und einem Wasseranteil von < 50 Gew.-%, bevorzugt < 40 Gew.-%, besonders bevorzugt < 25 Gew.-%, bezogen auf den Gewichtsanteil der flüssigen Zusammensetzung als solche ohne Feststoffpartikel stabil sind und über mehrere Wochen als homogene Suspension in der flüssigen Zusammensetzung vorliegen.

In einer Weiterbildung der vorliegenden Erfindung enthalten die Feststoffpartikel ferner die Komponente g) Wasser in den Gewichtsmengen 0 Gew.-% bis 2 Gew.-%, bezogen auf das Gesamtgewicht der Feststoffpartikel. Die erfindungsgemäßen Feststoffpartikel zeichnen sich durch eine außerordentliche Hydrolysestabilität aus und sind auch nach einer Lagerung bei + 30 °C und einer relativen Luftfeuchtigkeit von 60 % stabil und rieselfähig.

Es hat sich als vorteilhaft herausgestellt, wenn die von der Sulfobenzoesäure oder deren Salzen abgeleitete Struktureinheit (VI) 3-Sulfobenzoesäure oder deren Salzen umfasst, bevorzugt deren Na- oder K-Salze. Dadurch kann eine verbesserte Soil Release Wirkung im Vergleich zu der von der 2-Sulfobenzoesäure bzw. 4-Sulfobenzoesäure oder deren Salzen abgeleiteten Struktureinheit erreicht werden.

In einer Weiterbildung der erfindungsgemäßen Feststoffpartikel weist der mindestens eine anionische aromatische Polyester ein gewichtsmittleres Molekulargewicht von 1.600 g/mol bis 10.000 g/mol aufweist. Diese erfindungsgemäßen anionischen aromatischen Polyester zeichnen sich durch eine sehr gute Soil Release Wirkung aus.

Das gewichtsmittlere Molekulargewicht beträgt bevorzugt 1.700 g/mol bis 8.000 g/mol, besonders bevorzugt 1.800 g/mol bis 6.000 g/mol, außerordentlich bevorzugt 1.900 g/mol bis 4.000 g/mol. Diese erfindungsgemäßen anionischen aromatischen Polyester zeichnen sich durch eine außerordentlich gute Soil Release Wirkung aus und sind bei Waschtemperaturen von 40 °C und darunter in der Waschflotte gut löslich.

Das gewichtsmittlere Molekulargewicht wird mittels Gelpermeations-Chromatographie (GPC) bestimmt, vorzugsweise in folgender Weise: 10 µl der Polyesterprobe werden in eine PSS Suprema Säule der Dimension 300 mm x 8 mm mit einer Porosität von 30 Å und der Partikelgröße von 10 µm injiziert. Mit einem multiplen Wellenlängendetektor wird bei 235 nm detektiert. Der verwendete Eluent ist ein Wasser/Acetonitril-Gemisch mit einem Volumenverhältnis von Wasser zu Acetonitril von 45 : 55 (v/v), das 1,25 g/l Dinatriumhydrogenphosphat enthält. Die Trennung wird bei einer Flussrate von 0,8 ml/Minute durchgeführt. Die Quantifizierung erfolgt durch externe Kalibrierungsstandards von Polyethylenglykolen mit unterschiedlichen Molekulargewichten.

Die erfindungsgemäßen Feststoffpartikel zeichnen sich ferner durch eine ausgezeichnete Hydrolysestabilität in Gegenwart von Wasser aus.

Die vorstehenden Ausführungen und Bevorzugungen im Hinblick auf die erfindungsgemäßen Feststoffpartikel gelten für die nachstehend beschriebenen Zubereitungen und Verwendungen entsprechend. Ebenso gelten die nachstehenden Ausführungen und Bevorzugungen im Hinblick auf die Zubereitungen und Verwendungen für die erfindungsgemäßen Feststoffpartikel entsprechend.

Zwei weitere Aspekte der Erfindung betreffen feste Zusammensetzungen und flüssige Zusammensetzungen, jeweils enthaltend die vorstehend beschriebenen erfindungsgemäßen Feststoffpartikel.

Es hat sich für eine flüssige Zubereitung enthaltend die vorstehend beschriebenen erfindungsgemäßen Feststoffpartikel als vorteilhaft herausgestellt, wenn diese ferner einen oder mehrere nichtionische Soil Release Polymere enthält.

Unter "nichtionischen Soil Release Polymere" werden im Sinne der vorliegenden Erfindung Polymere verstanden, die Struktureinheiten, abgeleitet von der Terepthalsäure bzw. deren Salze und Ethylenglycol, gegebenenfalls Propylenglycol und gegebenenfalls Polyethylenglycol mit gewichtsmittleren Molekulargewichten von 200 bis 6000 g/mol, enthalten, wobei diese Polymere mit nichtionischen Gruppen endverschlossen sein können, vorzugsweise mit Methylalkoxygruppen.

Geeignete nichtionische Soil Release Polymere sind beispielsweise in DE 198 26 356 A1 und EP 2 431 456 A1 beschrieben. Bevorzugte nichtionische Soil Release Polymere sind solche, die durch Polykondensation von 40 mol% bis 52 mol%, vorzugsweise 45 mol% bis 50 mol% eines Terephtalats oder dessen Ester, 10 mol% bis 40 mol%, vorzugsweise 20 mol% bis 35 mol% Ethylenglykol und/oder Propylenglykol, 3 mol% bis 20 mol%, vorzugsweise 10 mol% bis 15 mol% Polyethylenglykol, und 0,5 bis 10, vorzugsweise 1 mol% bis 7,5 mol% eines wasserlöslichen Anlagerungsproduktes von 5 mol bis 80 mol eines Alkylenoxids an 1 mol C₁- bis C₂₄-Alkohole, C₆- bis C₁₈-Alkylphenole oder C₈- bis C₂₄-Alkylamine enthalten.

Sehr bevorzugt sind die nichtionische Soil Release Polymere TexCare^{®} SRN 100, TexCare^{®} SRN 170, TexCare^{®} SRN 240, TexCare^{®} SRN 300 und TexCare^{®} SRN 325 von Clariant sowie Repel-O-Tex^{®} SRP-6 von Rhodia.

Durch das Zusammenwirken der in den erfindungsgemäßen Feststoffpartikeln enthaltenen anionischen Soil Release Polymere und den in der flüssigen Zusammensetzung enthaltenen nichtionischen Soil Release Polymere wird eine verstärkte Wirkung des Soil Release Effektes erreicht, aber auch eine verstärkte vergrauungsinhibierende Wirkung, insbesondere auf Baumwoll-Polyester-Mischgewebe erzielt.

Die erfindungsgemäßen Feststoffpartikel eignen sich zur Herstellung sowohl von festen als auch von flüssigen Wasch- und Reinigungsmittel. Die erfindungsgemäß verwendeten Feststoffpartikel in Wasch- und Reinigungsmitteln zeichnen sich durch eine verbesserte Primärwaschwirkung aus im Vergleich zu Wasch- und Reinigungsmitteln, enthaltend analoge Feststoffpartikel, die anionische aromatische Polyester ohne Struktureinheiten des Isosorbids enthalten.

Zwei weitere Aspekte der Erfindung betreffen die Verwendung der erfindungsgemäßen Feststoffpartikel zur Herstellung eines festen Wasch- und Reinigungsmittels und die Verwendung der erfindungsgemäßen Feststoffpartikel zur Herstellung eines flüssigen Wasch- und Reinigungsmittels.

Die Wasch-, Pflege- und Reinigungsmittelformulierungen, in denen die erfindungsgemäßen anionischen aromatischen Polyester eingesetzt werden können, können pulver-, granulatförmig, tablettenförmig, pastenförmig/pastös, gelförmig oder flüssig sein oder auch in Mehrkammersystemen in Form von sog. Pouches (Beuteln) dargeboten werden.

Beispiele hierfür sind Vollwaschmittel, Feinwaschmittel, Colorwaschmittel, Wollwaschmittel, Gardinenwaschmittel, Baukastenwaschmittel, Waschtabletten, sog. "bar soaps" (klassische Seifenstücke), Fleckensalze, Wäschestärken und Wäschesteifen und Bügelhilfen.

Die erfindungsgemäßen anionischen aromatischen Polyester können auch in Haushaltsreinigungsmitteln, beispielsweise in Allzweckreinigern, oder in Geschirrspülmitteln, in Teppichreinigungsmitteln und Imprägniermitteln, in Reinigungs-und Pflegemitteln für Böden und andere harte Oberflächen, z.B. aus Kunststoff, Keramik, Glas oder mit Nanotechnologie beschichtete Oberflächen eingearbeitet werden.

Die erfindungsgemäßen anionischen aromatischen Polyester wirken als gute Anti-Spottingmittel, insbesondere auf Glasoberflächen, und bewirken einen guten Glanz, insbesondere auf Metalloberflächen. Zudem zeigen Oberflächenreiniger, insbesondere Oberflächenreiniger zum Reinigen von Kunststoff- oder Keramikoberflächen, enthaltend die erfindungsgemäßen anionischen aromatischen Polyester eine deutlich reduzierten Wiederanschmutzungseffekt. Mit diesen Oberflächenreinigern gereinigte Oberflächen sind leichter zu reinigen und Kalkablagerungen sind reduziert.

Ein weiterer Aspekt der Erfindung betrifft Wasch- und Reinigungsmittel enthaltend die erfindungsgemäßen Feststoffpartikel.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die festen und flüssigen Wasch- und Reinigungsmittel, enthaltend die erfindungsgemäßen Feststoffpartikel, enthalten vorzugsweise mindestens 0,01 Gew.-%, vorzugsweise zwischen 0,1 Gew.-% und 10 Gew.-% und besonders bevorzugt 0,2 Gew.-% bis 3 Gew.-%, eines oder mehrerer der vorstehend beschriebenen anionischen aromatischen Polyester, bezogen auf das Gesamtgewicht des Wasch- und Reinigungsmittels.

Weitere Ziele, Merkmale, Vorteile und Anwendungsmöglichkeiten ergeben sich aus der nachfolgenden Beschreibung von die Erfindung nicht einschränkenden Ausführungsbeispielen. Dabei bilden alle beschriebenen und/oder anderweitig dargestellten Merkmale für sich oder in beliebiger Kombination den Gegenstand der Erfindung, auch unabhängig von ihrer Zusammenfassung in den Ansprüchen oder deren Rückbeziehung.

### Synthese

Die Synthese der vorstehend beschriebenen anionischen aromatischen Polyester erfolgte nach an sich bekannten Verfahren, indem die unter a) bis e) und optional f) und optional g) genannten sowie gegebenenfalls weitere Komponenten unter Zusatz eines Katalysators zunächst bei Normaldruck auf Temperaturen von 160 °C bis etwa 220 °C unter Verwendung einer inerten Atmosphäre erhitzt wurden. Dann wurden die erforderlichen Molekulargewichte im Vakuum bei Temperaturen von 160 °C bis etwa 220 °C durch Abdestillieren überstöchiometrischer Mengen der eingesetzten Glykole aufgebaut. Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid / Calciumacetat. Für weitere Informationen zu der Durchführung des Verfahrens wird Bezug genommen auf EP 1 966 273 A1.

Bevorzugt sind anionische aromatische Polyester, die während der Synthese beim Abkühlen zu einer Schmelze erstarren oder durch Aufbringen auf eine Schuppenwalze oder auf ein Laufband bei 40 °C bis 80 °C, bevorzugt 45 °C bis 55 °C, zu Schuppen oder Flakes verfestigt werden. Dieses Grobgut kann beispielsweise im Walzenstuhl und/oder in der Siebmühle vermahlen werden, der sich eine Siebung anschließen kann. Die Granulierung kann auch in der Weise erfolgen, dass die Polyester nach der Erstarrung zu Pulver mit Partikelgrößen < 400 µm vermahlen werden und anschließend zu Feststoffpartikeln mit einem mittleren Partikeldurchmesser X_{50,3} von 0,05 mm bis 2 mm, bevorzugt 0,1 mm bis 1,5 mm, besonders bevorzugt 0,5 mm bis 1,2 mm, kompaktiert oder agglomeriert werden. Die so erhaltenen Feststoffpartikel können mit einer Coatingschicht umhüllt sein, um ein Agglomerieren der Feststoffpartikel zu verhindern. Die Coatingschicht kann aus einem oder mehreren Polymeren bestehen, beispielsweise aus Polyethylenglykol 6.000 oder alkoxylierten Fettalkoholen, beispielsweise C_{16/18}-Fettalkoholethoxylaten mit > 20 EO-Einheiten, bevorzugt 25 bis 100 EO-Einheiten. Die Coatingschicht kann beispielsweise auch aus Na₂SO₄ oder TiO₂ bestehen.

### Beispiele

### Beispiel 1: Polyester 1

In einem 4-I Vierhalskolben mit KPG-Rührer, Innenthermometer, Gaseinleitungsrohr und Destillierbrücke wurden 540,6 g Isosorbid, 229,6 g Ethylenglykol, 550,0 g PEG-550-monomethylether, 970,9 g Terephthalsäuredimethylester und 236,98 g 5-Sulfoisophthalsäuredimethylester-Na-Salz vorgelegt und das Reaktionsgemisch anschließend durch Einleitung von N₂ inertisiert. Im Gegenstrom wurde anschließend 4 g Titantetraisopropylat und 2,2 g Natriumacetat zur Reaktionsmischung hinzugegeben. Das Gemisch wurde am Ölbad langsam aufgeheizt, wobei ab etwa 120 °C bis 150 °C Innentemperatur die festen Komponenten anfingen aufzuschmelzen. Unter Rühren wurde nun innerhalb von 1 Stunde auf 215 °C erhitzt. Im Laufe von 2 Stunden wurde die Innentemperatur auf 215 °C gehalten, bis die gemäß Stöchiometrie freigesetzte Menge an Methanol abdestilliert war. Danach wurde die Ölbadtemperatur auf ca. 220 °C gesteigert und bei einem Vakuum von 5 mbar innerhalb von 2 Stunden die Kondensation durch Abdestillieren der überschüssigen Alkoholmenge vervollständigt. Anschließend wurde mit N₂ belüftet, die Schmelze auf Bleche ausgetragen und die erstarrte Schmelze mit einer Schuppenwalze zu Flakes und dann in einer Hammermühle zu einem Pulver mit Partikelgrößen von maximal 50 µm vermahlen und mit einem Extruder zu Feststoffpartikel mit einem mittleren Partikeldurchmesser X_{50,3} von 1,2 mm kompaktiert.

### Beispiele 2 bis 7 und Vergleichsbeispiel V-1

Die Herstellung erfolgte in der gleichen Herstellweise wie für Polyester 1 beschrieben, wobei die in Tabelle 1 genannten Komponenten in den angegebenen Mengen umgesetzt wurden.

**Tabelle 1: Einsatzmengen der Komponenten zur Herstellung der Polyester 2 bis 7 und des Polyesters V-1**

| Polyester | DMT | 5-SIM | Isosorbid | EG | PG | MPEG | MPEG | SBS | Iseth, Na |
|---|---|---|---|---|---|---|---|---|---|
| | [g] | [g] | [g] | [g] | [g] | [g] | Typ [g/mol] | [g] | [g] |
| 2 | 970,9 | 237 | 540,6 | 186,2 | 0 | 440 | 550 | 0 | 0 |
| 3 | 970,9 | 296,2 | 365,4 | 124,1 | 76,1 | 750 | 750 | 0 | 0 |
| 4 | 1165,1 | 296,2 | 192,3 | 124,1 | 76,1 | 300 | 750 | 0 | 88 |
| 5 | 1359,3 | 0 | 192,3 | 186,2 | 0 | 300 | 750 | 56 | 29,6 |
| 6 | 1553,5 | 0 | 192,3 | 186,2 | 76,1 | 55 | 550 | 0 | 103,6 |
| 7 | 1359,3 | 0 | 192,3 | 186,2 | 0 | 300 | 750 | 56 | 29,6 |
| V-1 | 970,9 | 296,2 | 0 | 279,3 | 76,1 | 750 | 750 | 0 | 0 |

| | | | | | | | | | |
|---|---|---|---|---|---|---|---|---|---|
| DMT Dimethyltherephthalsäureester 5-SIM 5-Sulfoisophthalsäuredimethylester, Natriumsalz EG Ethylenglykol PG 1,2-Propylenglykol SBS a o-, m-, p- Sulfobenzoesäure, Natriumsalz SBS b p-Sulfobenzoesäure, Natriumsalz Iseth, Na 2-Hydroxyethansulfonsäure, Natriumsalz MPEG Polyethylenglykolmonomethylether mit mittleren Molekulargewichten 550 und 750 g/mol | | | | | | | | | |

Der erfindungsgemäß im Feststoffpartikel enthaltene Polyester 3 wurde auf seinen Soil Release Effekt hin mit dem sog. "Dirty Motor Oil Test" untersucht und mit einem analogen Polyester V-1 verglichen, der dadurch gekennzeichnet war, dass er keine Isosorbid-Struktureinheit enthielt und der Isosorbidanteil im Polyester 3 durch EO-Einheiten ersetzt war.

Der "Dirty Motor Oil Test" dient dazu, die Entfernung von synthetischem Öl aus einem in Gegenwart des entsprechenden Polyesters vorgewaschenen hydrophoben Gewebe auszuwerten und die Stabilität dieses Polyesters bei verschiedenen Lagerzeiten zu überwachen.

### Soil Release Test

Der Polyester 3 und der Vergleichspolyester V-1 wurden mit dem "Dirty Motor Oil Test" auf ihren Soil Release Effekt hin geprüft.

Dazu wurden Polyester 3 bzw. Polyester V-1 in einer Konzentration von 1 % (Polyester), bezogen auf das verwendete Testwaschmittel, den jeweiligen Waschlaugen zugesetzt. Mit diesen Waschlaugen wurde weißes Polyestergewebe Testex PES 730 (Testfabrics Inc., USA) vorgewaschen. Die so vorbehandelten Gewebe wurden getrocknet und anschließend mit Motorenaltöl angeschmutzt. Nach einer Einwirkzeit von 1 Stunde wurden die angeschmutzten Gewebeprüflinge unter den gleichen Waschbedingungen mit dem Testwaschmittel unter Zusatz der Polyester 3 bzw. V-1 nachgewaschen. Anschließend wurden die Remissionswerte (Weißgrade) der Testgewebe bestimmt.

Als Testwaschmittel wurde für den "Dirty Motor Oil Test" das Standardwaschpulver IEC-B der Wäschereiforschung Krefeld verwendet.

### IEC-B Waschpulver (phosphathaltig, ohne Bleichmittel)

| | |
|---|---|
| Alkylbenzolsulfonat, Na-Salz | 8,0 Gew.-% |
| C₁₂₋₁₈-Alcoholethoxylate mit 14 EO | 2,9 Gew.-% |
| Seife | 3,5 Gew.- % |
| Natriumtripolyphosphat | 43,8 Gew.-% |
| Natriumsilikat | 7,5 Gew.-% |
| Magnesiumsilikat | 1,9 Gew.-% |
| Carboxymethylcellulose | 1,2 Gew.-% |
| EDTA | 0,2 Gew.-% |
| Optischer Aufheller | 0,2 Gew.-% |
| Natriumsulfat | 21,0 Gew.-% |
| Wasser | ad 100 Gew.-% |

Der "Dirty Motor Oil" Test und die Tests für die Primärwaschwirkung wurden nach folgenden Waschbedingungen durchgeführt:

| | |
|---|---|
| Waschmaschine: | Linitest |
| Wasserhärte: | 15°dH |
| Flottenverhältnis: | 1 : 40 |
| Waschtemperatur: | 40 °C |
| Waschzeit: | 30 Min. |
| Waschmittelkonzentration: | 6 g/l |

In Tabelle 2 sind die Testresultate zusammengefasst, die nach dem Soil Release Test erhalten wurden.

**Tabelle 2: Soil Release Effekt des Polyesters 3 gemäß Tabelle 1 im Vergleich zum Polyester V-1 in dem Waschpulver IEC-B, sowie das Vergleichsergebnis des Soil Release Tests für das Polyestergewebe Testex PES 730 ohne Vorbehandlung mit Polyester 3 bzw. V-1**

| IEC-B | Remission [%] |
|---|---|
| ohne Zusatz | 14,1 |
| + 1% Polyester V-1 | 61,5 |
| + 1 % Polyester 3 | 66. 0 |

### Primärwaschvermögen

Der Polyester 3 und der Vergleichspolyester V-1 wurden mit einer Mehrfachwäsche von Testschmutzgeweben auf ihre Primärwaschwirkung hin untersucht.

Dazu wurde Polyestertestschmutzgewebe wfk 20C (Wäschereiforschungsanstalt Krefeld) viermal mit dem Testwaschmittel IEC-B ohne und mit einem Zusatz von je 1 % Polyester gewaschen. Nach jeder Wäsche wurden die Remissionswerte (Weißgrade) bestimmt.

In Tabelle 3 sind die Testresultate zusammengefasst, die nach den Tests für die Primärwaschwirkung erhalten wurden.

**Tabelle 3: Primärwaschwirkung des Polyesters 3 gemäß Tabelle 1 im Vergleich zum Polyester V-1 in dem Waschpulver IEC-B an Polyester/ Baumwolle WFK 20 C**

| | 1x | 2x | 3x | 4x |
|---|---|---|---|---|
| IEC-B ohne Zusatz | 43,1 | 46,3 | 48,5 | 50,1 |
| 1 % Polyester 3 | 47,4 | 60,2 | 68,3 | 78,9 |
| 1% Polyester V-1 | 46,3 | 57,9 | 65,2 | 72,5 |

### Auswertung

Die Testergebnisse der Tabelle 2 zeigen, dass durch Zugabe von erfindungsgemäßen Feststoffpartikeln zu einem Waschmittel zum Reinigen von Textilien am Beispiel eines Polyestergewebes eine signifikante Verbesserung der Remissionswerte (des Weißgrades) erzielt wurde im Vergleich zu einem anionischen aromatischen Polyester der keine Struktureinheit eines Isosorbids enthielt.

Die Testergebnisse der Tabelle 3 belegen eine deutlich verbessertes Primärwaschwirkung am Beispiel eines Baumwoll-/Polyester Mischgewebes.

## Patentansprüche

1. Feststoffpartikel umfassend mindestens einen anionischen aromatischen Polyester enthaltend die Komponenten
a) mindestens eine Struktureinheit der Formel (I) 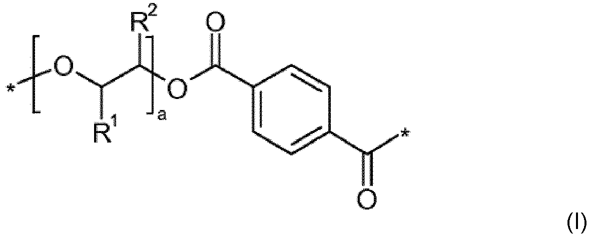
b) mindestens eine Struktureinheit der Formel (IIa) und/oder (IIb)
-(-CH₂-CH₂-O-)_{c}-(-CHR⁵-CHR⁶-O)_{d}-R⁷ (IIa)
-(-CHR⁵-CHR⁶-O-)_{d}-(-CH₂-CH₂-O)_{c}-R⁷ (IIb)
c) mindestens eine Struktureinheit der Formel (III) 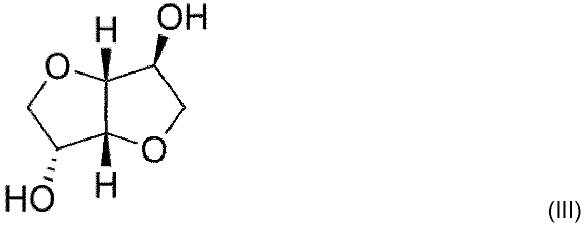
d) ein oder mehrere Diole, ausgewählt aus Ethylenglykol, 1,2-Propylenglykol und Butylenglykol,
e) eine oder mehrere Struktureinheiten, die aus den Formeln (IV), (V) und (VI) ausgewählt sind 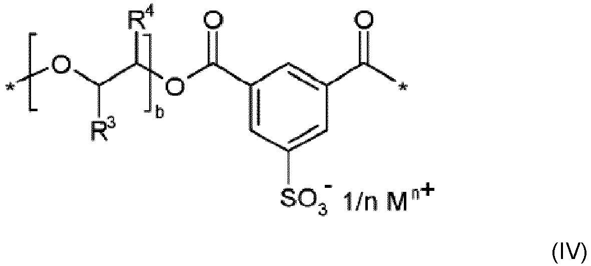
1/n Mⁿ⁺ SO₃- -(-CH₂-CH₂-O -)ₑ ⁻ (V)
eine von der Sulfobenzoesäure oder deren Salzen abgeleitete Struktureinheit (VI), worin
R¹, R², R³, R⁴, R⁵ und R⁶ unabhängig voneinander jeweils für Wasserstoff oder Methyl steht,
R⁷ für Methyl steht,
a und b unabhängig voneinander jeweils für eine Zahl von 1 bis 10 stehen,
c und d unabhängig für eine Zahl von 1 bis 60 stehen,
e für die Zahl 1 bis 10 steht und
1/n Mⁿ⁺ für ein Äquivalent eines Kations mit der Ladungszahl n steht, mit n = 1, 2 oder 3,
mit der Maßgabe, dass der anionische aromatische Polyester mindestens eine Struktureinheit ausgewählt aus (IV), (V) oder (VI) enthalten muss.

2. Feststoffpartikel nach Anspruch 1, wobei die Feststoffpartikel, bezogen auf das Gewicht der Feststoffpartikel, eine Gesamtmenge von 5 Gew.-% bis 100 Gew.-%, des mindestens einen anionischen aromatischen Polyesters umfassen.

3. Feststoffpartikel nach einem der Ansprüche 1 oder 2, ferner umfassend mindestens ein weiteres Polymer, ausgewählt aus einem nichtionischen, aromatischen Polyester und/oder einem Polymer ausgewählt aus Cellulose, insbesondere Methylcellulose, Carboxymethylcellulose oder Hydroxyethylcellulose, Polyethylenglykole, (Meth)arylsäurepolymere und - copolymere, Polymere und Copolymere der 2-Acrylamido-2-methylpropansulfonsäure, Alginate, Agar, Carrageenan, Pectin, Gelantine und Gellan Guar.

4. Feststoffpartikel nach einem der Ansprüche 1 bis 3, ferner enthaltend die Komponente g) Wasser in den Gewichtsmengen 0 Gew.-% bis 2 Gew.-%, bezogen auf das Gesamtgewicht der Feststoffpartikel.

5. Feststoffpartikel nach einem der Ansprüche 1 bis 4, wobei die von der Sulfobenzoesäure oder deren Salzen abgeleitete Struktureinheit (VI) 3-Sulfobenzoesäure oder deren Salzen umfasst, bevorzugt deren Na- oder K-Salze.

6. Feststoffpartikel nach einem der Ansprüche 1 bis 5, wobei die Komponente d) ein oder mehrere Diole von Ethylenglykol und 1,2-Propylenglykol ohne weitere Struktureinheit abgeleitet ist, wobei das Verhältnis von Ethylenglycol zu 1,2-Propylenglycol > 0,5 ist.

7. Feste Zubereitung, enthaltend Feststoffpartikel nach einem der Ansprüche 1 bis 6.

8. Flüssige Zubereitung, enthaltend Feststoffpartikel nach einem der Ansprüche 1 bis 6 in suspendierter Form.

9. Flüssige Zubereitung nach Anspruch 7, ferner enthaltend einen oder mehrere nichtionische Soil Release Polymere.

10. Verwendung von Feststoffpartikeln nach einem der Ansprüche 1 bis 6 zur Herstellung eines festen Wasch- und Reinigungsmittels.

11. Verwendung von Feststoffpartikeln nach einem der Ansprüche 1 bis 6 zur Herstellung eines flüssigen Wasch- und Reinigungsmittels.

## Claims

1. Solid particles comprising at least one anionic aromatic polyester containing the components
a) at least one structural unit of the formula (I) 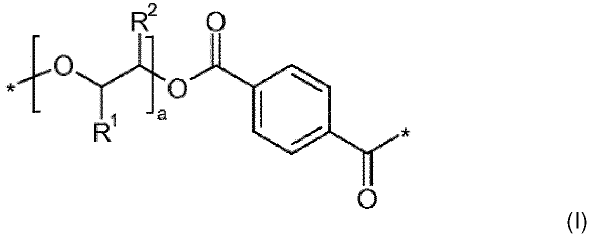
b) at least one structural unit of the formula (IIa) and/or (IIb)
-(-CH₂-CH₂-O-)_{c}-(-CHR⁵-CHR⁶-O)_{d}-R⁷ (IIa)
-(-CHR⁵-CHR⁶-O-)_{d}-(-CH₂-CH₂-O)_{c}-R⁷ (IIb)
c) at least one structural unit of the formula (III) 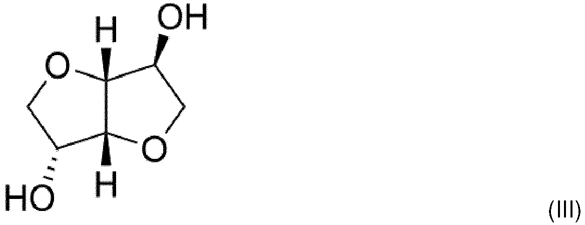
d) one or more diols selected from ethylene glycol, 1,2-propylene glycol and butylene glycol,
e) one or more structural units selected from formulae (IV), (V) and (VI) 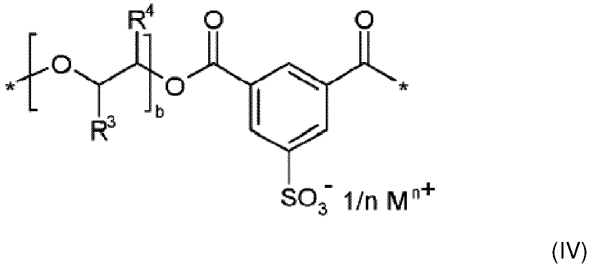
1/n Mⁿ⁺ SO₃- -(-CH₂-CH₂-O-)ₑ ⁻ (V)
a structural unit (VI) derived from sulfobenzoic acid or its salts, worin
R¹, R², R³, R⁴, R⁵ and R⁶ independently of one another each represent hydrogen or methyl
R⁷ is methyl,
a and b independently of one another are each a number from 1 to 10,
c and d independently represent a number from 1 to 60,
e is a number from 1 to 10, and
1/n Mⁿ⁺ represents an equivalent of a cation having the charge number n, with n = 1, 2 or 3,
with the proviso that the anionic aromatic polyester must contain at least one structural unit selected from (IV), (V) or (VI).

2. Solid particles according to claim 1, wherein the solid particles comprise, based on the weight of the solid particles, a total amount of from 5 wt.-% to 100 wt.-% of the at least one anionic aromatic polyester.

3. Solid particles according to any one of claims 1 or 2, further comprising at least one further polymer selected from a nonionic aromatic polyester and/or a polymer selected from cellulose, in particular methylcellulose, carboxymethyl cellulose or hydroxyethyl cellulose, polyethylene glycols, (meth)arylic acid polymers and copolymers, polymers and copolymers of 2-acrylamido-2-methylpropane sulfonic acid, alginates, agar, carrageenan, pectin, gelatin and gellan guar.

4. Solid particles according to any one of claims 1 to 3, further comprising component g) water in the amounts by weight 0 wt.-% to 2 wt.-%, based on the total weight of the solid particles.

5. Solid particles according to any one of claims 1 to 4, wherein the structural unit (VI) derived from the sulfobenzoic acid or salts thereof comprises 3-sulfobenzoic acid or salts thereof, preferably Na or K salts thereof.

6. Solid particles according to any one of claims 1 to 5, wherein component d) comprises one or more diols derived from ethylene glycol and 1,2-propylene glycol without further structural unit, wherein the ratio of ethylene glycol to 1,2-propylene glycol is > 0.5.

7. A solid preparation comprising solid particles according to any one of claims 1 to 6.

8. A liquid preparation comprising solid particles according to any one of claims 1 to 6 in suspended form.

9. The liquid preparation according to claim 7, further comprising one or more nonionic soil release polymers.

10. Use of solid particles according to any one of claims 1 to 6 for the manufacture of a solid detergent and cleaning composition.

11. Use of solid particles according to any one of claims 1 to 6 for the manufacture of a liquid detergent and cleaning composition.

## Revendications

1. Particules solides comprenant au moins un polyester aromatique anionique contenant les composants
a) au moins un motif structural de formule (I) 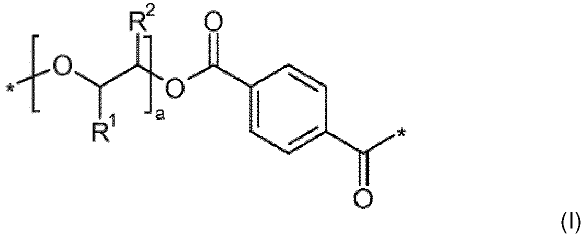
b) au moins un motif structural de formule (IIa) et/ou (IIb))
-(-CH₂-CH₂-O-)_{c}-(-CHR⁵-CHR⁶-O)_{d}-R⁷ (IIa)
-(-CHR⁵-CHR⁶-O-)_{d}-(-CH₂-CH₂-O)_{c}-R ⁷ (IIb)
c) au moins un motif structural de formule (III) 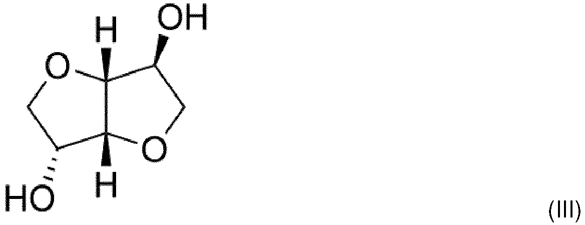
d) un ou plusieurs diols, sélectionnés parmi l'éthylène glycol, le 1,2-propylène glycol et le butylène glycol,
e) un ou plusieurs motifs structuraux, qui sont sélectionnés parmi les formules (IV), (V) et (VI) 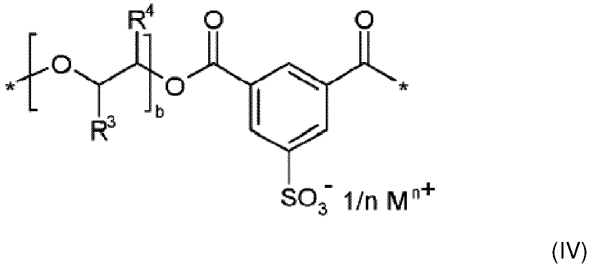
1/n Mⁿ⁺ SO₃- -(-CH₂-CH₂-O-)ₑ ⁻ (V)
un motif structural dérivé de l'acide sulfobenzoïque ou de ses sels (VI), où
R¹, R², R³, R⁴, R⁵ and R⁶ représentent indépendamment l'un de l'autre respectivement de l'hydrogène ou du méthyle,
R⁷ représente du méthyle,
a et b représentent indépendamment l'un de l'autre respectivement un chiffre de 1 à 10,
c et d représentent indépendamment un chiffre de 1 à 60,
e représente le chiffre 1 à 10 et
1/n Mⁿ⁺ représente un équivalent d'un cation avec le nombre de charge n, avec n = 1, 2 ou 3,
à condition que le polyester aromatique anionique doive contenir au moins un motif structural sélectionné parmi (IV), (V) ou (VI).

2. Particules solides selon la revendication 1, dans lesquelles les particules solides, par rapport au poids des particules solides, comprennent une quantité totale de 5 % en poids à 100 % en poids de l'au moins un polyester aromatique anionique.

3. Particules solides selon l'une quelconque des revendications 1 ou 2, comprenant en outre au moins un autre polymère, sélectionné parmi un polyester aromatique non ionique et/ou un polymère sélectionné parmi la cellulose, en particulier la méthylcellulose, la carboxyméthylcellulose ou l'hydroxyéthylcellulose, les polyéthylènes glycol, les polymères et copolymères d'acide (méth)acrylique, les polymères et copolymères de l'acide 2-acrylamido-2-méthylpropane sulfonique, l'alginate, l'agar, la carraghénane, la pectine, la gélatine et la gellane guar.

4. Particules solides selon l'une quelconque des revendications 1 à 3, contenant en outre le composant g) eau dans des quantités de poids de 0 % en poids à 2 % en poids, par rapport au poids total des particules solides.

5. Particules solides selon l'une quelconque des revendications 1 à 4, dans lesquelles le motif structural (VI) dérivé de l'acide sulfobenzoïque ou de ses sels comprend de l'acide 3-sulfobenzoïque ou ses sels, de préférence ses sels Na ou K.

6. Particules solides selon l'une quelconque des revendications 1 à 5, dans lesquelles le composant d) un ou plusieurs diols est dérivé de l'éthylène glycol et de 1,2-propylène glycol sans autre motif structural, dans lesquelles le rapport de l'éthylène glycol par rapport à 1,2-propylène glycol est > 0,5.

7. Préparation solide, contenant des particules solides selon l'une quelconque des revendications 1 à 6.

8. Préparation liquide, contenant des particules solides selon l'une quelconque des revendications 1 à 6 sous forme de suspension.

9. Préparation liquide selon la revendication 7, contenant en outre un ou plusieurs polymères de libération de souillures non ioniques.

10. Utilisation de particules solides selon l'une quelconque des revendications 1 à 6 pour la fabrication d'un produit de lavage et de nettoyage solide.

11. Utilisation de particules solides selon l'une quelconque des revendications 1 à 6 pour la fabrication d'un produit de lavage et de nettoyage liquide.
